(19) Europäisches Patentamt
European Patent Office
Office européen des brevets

(11) **EP 4 456 201 A1**

(12) **EUROPEAN PATENT APPLICATION**
published in accordance with Art. 153(4) EPC

(43) Date of publication:
**30.10.2024 Bulletin 2024/44**

(21) Application number: **22911324.6**

(22) Date of filing: **22.12.2022**

(51) International Patent Classification (IPC):
*H01M 4/62* (2006.01)  *H01M 4/131* (2010.01)
*H01M 4/1391* (2010.01)  *H01M 4/36* (2006.01)
*H01M 4/505* (2010.01)  *H01M 4/525* (2010.01)

(52) Cooperative Patent Classification (CPC):
H01M 4/131; H01M 4/1391; H01M 4/36;
H01M 4/505; H01M 4/525; H01M 4/62; Y02E 60/10

(86) International application number:
**PCT/JP2022/047281**

(87) International publication number:
**WO 2023/120622 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 JP 2021209448**

(71) Applicant: **Panasonic Intellectual Property
Management Co., Ltd.
Kadoma-shi, Osaka 571-0057 (JP)**

(72) Inventors:
• **HARADA, Maho
Kadoma-shi, Osaka 571-0057 (JP)**
• **NAKAYAMA, Takahito
Kadoma-shi, Osaka 571-0057 (JP)**

(74) Representative: **Novagraaf International SA
Chemin de l'Echo 3
1213 Onex, Geneva (CH)**

(54) **SECONDARY BATTERY POSITIVE ELECTRODE, PRODUCTION METHOD THEREFOR, AND SECONDARY BATTERY**

(57)    A positive electrode for a secondary battery including a positive electrode current collector, and a positive electrode active material layer supported on the positive electrode current collector. The positive electrode active material layer contains active material particles, a binder, and a thermal decomposable additive. The thermal decomposable additive includes a sulfamic acid. The binder includes at least one selected from the group consisting of a fluorocarbon resin and a hydrogenated nitrile butadiene rubber.

FIG. 1

**Description**

[Technical Field]

The present disclosure mainly relates to a positive electrode for a secondary battery.

[Background Art]

For a secondary battery, as its energy density is increased, improvement in safety is required. In particular, it is important to reduce the heat generation due to internal short circuit. When the battery has internal short circuit, even though the shorted portion is small, the Joule heat generated by short-circuit current melts the separator, to form a larger shorted portion. When the shorted portion expands and the short-circuit current increases, the battery temperature rises acceleratingly. The higher the energy density of the secondary battery is, the more the Joule heat generated by short-circuit current increases.

Patent Literature 1 proposes a positive electrode active material comprising a composite oxide mainly composed of lithium and nickel and having a layered crystal structure, which is a powder having an element composition represented by a general formula: $Li_aNi_{1-b-c}M1_bM2_cO_2$, where $0.95 \leq a \leq 1.05$, $0.01 \leq b \leq 0.10$, and $0.10 \leq c \leq 0.20$ (here, M1 is one or more elements selected from Al, B, Y, Ce, Ti, Sn, V, Ta, Nb, W, and Mo, and M2 is one or more elements selected from Co, Mn, and Fe), and is characterized by that when the powder is pressure-molded, an electrical conductivity $\sigma$ at 25 °C of a powder compact at a compression density of 4.0 g/cm$^3$ is within the range of $5 \times 10^{-2} \geq \sigma \geq 5 \times 10^{-4}$ [S/cm].

[Citation List]

[Patent Literature]

Patent Literature 1: Japanese Laid-Open Patent Publication No. 2000-315502

[Summary of Invention]

[Technical Problem]

Patent Literature 1 discloses that, according to the above positive electrode active material, the thermal stability in a charged state can be improved, and even when an internal short circuit occurs in the battery, the Joule heat generation by short-circuit current can be suppressed, easily leading to ensured safety.

However, when controlling the electrical conductivity of the powder compact as in Patent Literature 1, the battery ends up in having a high resistance as a whole, causing a deterioration in battery performance. Moreover, the solution in Patent Literature 1 is specialized for a composite oxide mainly composed of lithium and nickel, and is poor in versatility.

[Solution to Problem]

One aspect of the present disclosure relates to a positive electrode for a secondary battery, including: a positive electrode current collector; and a positive electrode active material layer supported on the positive electrode current collector, wherein the positive electrode active material layer contains active material particles, a binder, and a thermal decomposable additive, the thermal decomposable additive includes a sulfamic acid, and the binder includes at least one selected from the group consisting of a fluorocarbon resin and a hydrogenated nitrile butadiene rubber

Another aspect of the present disclosure relates to a secondary battery, including: the above-described positive electrode for a secondary battery; a negative electrode; a nonaqueous electrolyte; and a separator interposed between the positive electrode and the negative electrode.

Still another aspect of the present disclosure relates to a method for producing a positive electrode for a secondary battery, the method including steps of: preparing a positive electrode slurry containing active material particles, a binder, a thermal decomposable additive, and a dispersion medium; preparing a positive electrode current collector; applying the positive electrode slurry onto a surface of the positive electrode current collector, to form an applied film; drying the applied film, to form an unrolled layer; and rolling the unrolled layer, to form a positive electrode active material layer, wherein the thermal decomposable additive includes a sulfamic acid, the binder includes at least one selected from the group consisting of a fluorocarbon resin and a hydrogenated nitrile butadiene rubber, and the dispersion medium includes an organic solvent.

[Advantageous Effects of Invention]

According to the present disclosure, while suppressing an increase in the resistance at room temperature, it is possible to increase the resistance at high temperature when an internal short circuit occurs in the battery. Therefore, both high safety and good battery performance can be achieved.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

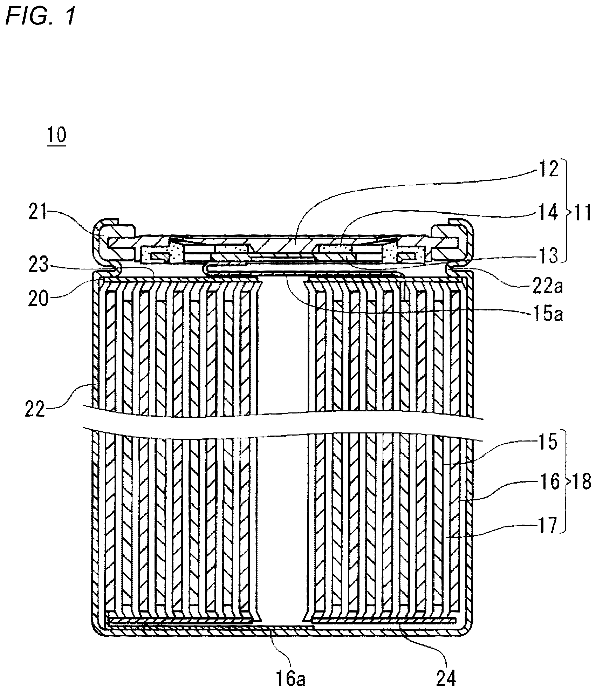

[FIG. 1] A schematic longitudinal cross-sectional view of the internal structure of a secondary battery according to an embodiment of the present disclosure.

[Description of Embodiments]

Embodiments of a positive electrode for a secondary battery according to the present disclosure and a secondary battery using the positive electrode will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

A. Positive electrode for secondary battery

A positive electrode for a secondary battery according to an embodiment of the present disclosure includes a positive electrode current collector, and a positive electrode active material layer supported on the positive electrode current collector. The positive electrode active material layer is formed on a surface of the positive electrode current collector.

[Positive electrode current collector]

The positive electrode current collector is constituted of a sheet of conductive material. The positive electrode current collector may be a non-porous conductive substrate (metal foil, etc.) or a porous conductive substrate (mesh, net, punched sheet, etc.).

[Positive electrode active material layer]

The positive electrode active material layer is supported on one or both surfaces of the positive electrode current collector. The positive electrode active material layer, usually, is a positive electrode mixture layer constituted of a positive electrode mixture and is in the form of a membrane or film. The positive electrode mixture includes, as essential components, active material particles (particles of a positive electrode active material), a binder, and a thermal decomposable additive. The active material particles may include a lithium-containing transition metal oxide. The binder includes at least one selected from the group consisting of a fluorocarbon resin and a hydrogenated nitrile butadiene rubber. The thermal decomposable additive includes a sulfamic acid.

The sulfamic acid, despite being present in the positive electrode active material layer, has little influence on the battery performance. The sulfamic acid may be an acid type whose OH group is bonded to a proton, may be a zwitterion type, and may be a salt type in which the proton of the OH group is replaced with a cation. The cation may be an ammonium cation, a metal cation (Na, K, Li, etc.), and the like.

When an internal short circuit occurs in the battery, the short-circuit current increases, and the battery temperature rises, the thermal decomposable additive decomposes thermally and blocks the conductive path. In other words, the thermal decomposable additive hardly causes an increase in resistance at room temperature, and has an effect of selectively increasing the battery internal resistance at high temperature. The sulfamic acid thermally decomposes at a temperature of about 210 °C or higher. Therefore, the battery internal resistance increases remarkably before the battery temperature rises excessively. Although not yet clear, the conductive path is blocked presumably through the following mechanism: a gas is generated within the positive electrode active material layer due to thermal decomposition of the thermal decomposable additive, which causes a local structural change in the positive electrode active material layer, and this results in an increase in the resistance.

The sulfamic acid is considered to have good affinity for a binder containing at least one selected from the group consisting of a fluorocarbon resin and a hydrogenated nitrile butadiene rubber (H-NBR). The fluorocarbon resin and H-NBR dissolve in an organic solvent (e.g., N-methyl-2-pyrrolidone) used as the dispersion medium for forming a positive electrode active material layer. The sulfamic acid also dissolves moderately in an organic solvent used as the dispersion medium. It is considered therefore that the sulfamic acid, which is dissolved moderately in the organic solvent and dispersed in the form of fine particles or assemblages into the organic solvent, can be uniformly dispersed, together with the binder, within the positive electrode active material layer. Furthermore, the sulfamic acid is unlikely to cause side reactions in the presence of an organic solvent and is considered to be stable. On the other hand, when water is used as the dispersion medium in forming a positive electrode active material layer, it is difficult to disperse the sulfamic acid in the form of fine particles into the positive electrode slurry because the sulfamic acid is readily dissolved completely in the water. Moreover, when water is used as the dispersion medium for a positive electrode slurry, the water deteriorates the positive electrode active material, causing a capacity drop in some cases.

At least part of the thermal decomposable additive is desirably present as particles having a particle diameter of 10 $\mu$m or more, in the positive electrode active material. Here, "particles" mean a concept that includes primary particles, secondary particles, and assemblages of these particles, and includes, in addition to ordinary grains or particles, concepts of aggregation, agglomeration, and the like. The particle diameter (or assemblage diameter) may be regarded, in the later-describe observation of a cross-section sample, as the diameter of an equivalent circle having the same area as the area surrounded by the outline of the particle (or assemblage). When the thermal decomposable additive is contained in such a size in the positive electrode active material layer, it is inferred that the local structural change of the positive electrode active material layer due to thermal decomposition of the thermal decomposable additive is increased, increasing the resistance more remarkably. The particle diameter of the thermal decomposable additive may be 20 $\mu$m or more, or 30 $\mu$m or more. A maximum value of the particle diameter of the thermal decomposable additive is desirably 100 $\mu$m or less, may be 60 $\mu$m or less, and may be 50 $\mu$m or less. When the maximum value of the particle diameter is within the above range, the influence on the battery performance can be sufficiently reduced.

The particle diameter can be measured in the following manner.

(1) Preparation of cross-section sample of positive electrode

First, a positive electrode to be measured is prepared. Next, the positive electrode active material layer and the positive electrode current collector are cut together along the thickness direction of the positive electrode, to form a cross section. At this time, a thermosetting resin may be packed into the positive electrode active material layer, and cured. For example, CP (cross-section polisher) method, FIB (focused ion beam) method, or the like may be used to obtain a cross-section sample of the positive electrode.

The positive electrode to be measured is taken out from a secondary battery with a depth of discharge (DOD) of 90% or more. The depth of discharge (DOD) means a ratio of the amount of electricity discharged to the amount of electricity that a fully charged battery has. The amount of charged electricity when a fully discharged battery (DOD = 100%) is charged until full charge (SOC = 100%, DOD = 0%) (i.e., full charge amount) is equivalent to the rated capacity. The voltage of a fully charged battery corresponds to the end-of-charge voltage. The voltage of a fully discharged battery corresponds to the end-of-discharge voltage.

(2) Photographing cross section of positive electrode with scanning electron microscope (SEM)

Next, the cross-section sample is observed with a SEM. The observation with a SEM is performed at low magnification (e.g., 200 times to 1000 times). A SEM image is taken such that a region of 300 $\mu$m or more (preferably 400 $\mu$m or more) long in the plane direction of the positive electrode active material layer can be observed.

(3) Elemental analysis by electron probe microanalyzer (EPMA)

Elemental analysis by EPMA is performed using the SEM image of the cross-section sample. A map of the thermal decomposable additive is obtained by extracting a component derived from the thermal decomposable additive (e.g., sulfur element), from the EPMA analysis data of the cross-section sample. The conditions for sulfur mapping measurement are that, with the accelerating voltage set at 8.0 kV and the irradiation current set at $1.0 \times 10^{-7}$ A, and with 1/10 of the maximum count number in the positive electrode active material layer determined as a threshold, the pixel at which the detection level is equal to or more than the threshold is regarded as a portion where the thermal decomposable additive is present. From the obtained map, a particle or assemblage of the thermal decomposable additive is identified. The diameter of an equivalent circle having the same area as the area of the specified particle or assemblage is determined as the particle diameter of the thermal decomposable additive.

As for the particles (or assemblages) of the thermal decomposable additive having a particle diameter of 10 $\mu$m or more, it suffices when one or more particles are observed, but desirably, five or more particles are observed in a rectangular field of view defined by a length 300 $\mu$m in a plane direction of the positive electrode active material layer multiplied by a thickness T of the positive electrode active material layer (when positive electrode active material layers are formed on both surfaces of the positive electrode current collector, one of the positive electrode active material layers on one surface (the same applies hereinafter)). The greater the number of the particles of the thermal decomposable additive having a particle diameter of 10 $\mu$m or more observed in the above field of view is, the greater the effect of selectively increasing the battery internal resistance at high temperature becomes. The upper limit of the number of the particles of the thermal decomposable additive having a particle diameter of 10 $\mu$m or more observed in the above field of view is, for example, 40 or less. Each of the aforementioned numbers may be an average value of the number of the particles of the thermal decomposable additive having a particle diameter of 10 $\mu$m or more counted in a plurality of (e.g., 3 or more) fields of view (each measuring 300 $\mu$m $\times$ T).

It suffices when a small amount of the thermal decomposable additive is contained in the positive electrode active material layer. The content of the sulfamic acid in the positive electrode active material layer may be, for example, 0.1 mass% or more and 5 mass% or less, may be 0.3 mass% or more and 3 mass% or less, and may be 0.5 mass% or more and 2 mass% or less. Also, when a cross section of the positive electrode active material layer is analyzed using a scanning electron microscope and an electron probe microanalyzer as described above, the area of a portion where the sulfamic acid is present may be 0.23 area% or more and 14 area% or less, may be 1 area% or more and 10 area% or less, and may be 1 area% or more and 5 area% or less, in a rectangular field of view defined by a length 300 $\mu$m in a plane direction of the positive electrode active material layer multiplied by a thickness T of the positive electrode active material layer. The sulfamic acid contained at the above content has no significant influence on the battery capacity. Furthermore, the sulfamic acid contained at the above content can be uniformly dispersed as the particles or assemblages of above-described appropriate particle diameter into the positive electrode active material layer.

The thermal decomposable additive may include a sulfuric acid component. The sulfuric acid component has an effect of suppressing the sedimentation of the positive electrode mixture in a positive electrode slurry prepared for forming a positive electrode active material layer. The sulfuric acid component may be a sulfuric acid having an OH group (acid type), or a salt type in which the proton of the OH group is replaced with a cation. The cation may be an ammonium cation, a metal cation (Na, K, Li, etc.), and the like. The sulfuric acid component is desirably contained in a proportion of 50 $\mu$g or more and 1000 $\mu$g or less per 1 g of the thermal decomposable additive or the sulfamic acid. The amount of the sulfuric acid component contained in the thermal decomposable additive or the sulfamic acid can be determined by, for example, peeling off the positive electrode active material layer from the positive electrode, extracting the sulfamic acid from the positive electrode active material layer using a solvent, and analyzing the solvent containing the sulfamic acid by ion chromatography. The solvent may be N-methyl-2-pyrrolidone (NMP).

It is desirable that the thermal decomposable additive covers part of the surfaces of the active material particles. The thermal decomposable additive present on the surfaces of the active material particles is considered to, at high temperature, effectively block the conductive path between the active material particles, between the active material particles and the conductive material, or between the active material particles and the positive electrode current collector. For example, the thermal decomposable additive present on the surfaces of the active material particles and thus interposed between the active material particles, through its state change such as gasification, reduces the contacts between the active material particles. On the other hand, when the thermal decomposable additive covers only part of the surfaces of the active material particles and does not cover the entire surfaces, the resistance to the battery reaction hardly increases.

The thermal decomposable additive covering only part of the surfaces of the active material particles can be confirmed by an EPMA elemental mapping of the SEM image of the positive electrode obtained by the already-described method.

The thermal decomposable additive (esp., particulate thermal decomposable additive (in particular, particles having a particle diameter of 10 $\mu$m or more)) is desirably more distributed near the outermost surface (i.e., on the separator side) of the positive electrode active material layer than near a surface facing the positive electrode current collector of the positive electrode active material layer. This is because a battery internal short circuit starts to expand, in many cases, on the separator side of the positive electrode active material layer. The internal short circuit occurs, for example, when an electrically conductive foreign matter penetrates a separator. By distributing the thermal decomposable additive to be localized on the separator side of the positive electrode active material layer, a high resistance region can be formed on the separator side of the positive electrode active material layer at an early stage after the occurrence of short circuit. Thus, it is possible to suppress the expansion of the shorted portion.

More specifically, when the thickness of the positive electrode active material layer is denoted by T, for example,

$2 \leq$ Pt/Pb is satisfied, and $3 \leq$ Pt/Pb $\leq 150$ may be satisfied, where the Pb represents a presence probability of the thermal decomposable additive present in a region from a surface of the positive electrode current collector to 0.5T in the positive electrode active material layer, and the Pt represents a presence probability of the thermal decomposable additive present in a region from a position at 0.5T from the surface of the positive electrode current collector to the outermost surface (i.e., the surface on the separator side of the positive electrode active material layer) in the positive electrode active material layer. Note that when Pt/Pb < 2, the thermal decomposable additive cannot be said as being substantially more distributed on the outermost surface side than on the positive electrode current collector side in the positive electrode active material layer.

Hereinafter, the region from the surface of the positive electrode current collector to 0.5T in the positive electrode active material layer is sometimes referred to as a "lower layer region", and the region from the position at 0.5T from the surface of the positive electrode current collector to the outermost surface in the positive electrode active material layer is sometimes referred to as an "upper layer region."

The Pb and the Pt can be measured by analyzing the cross-section sample of the positive electrode obtained by the method described above using SEM and EPMA. Specifically, in an elemental map of the thermal decomposable additive obtained from an EPMA analysis data of the cross-section sample, the areas occupied by the thermal decomposable additive in the lower layer region and in the upper layer region are measured. At this time, regardless of the particle diameter of the thermal decomposable additive, all the particles of the thermal decomposable additive are counted. The area percentages of the thermal decomposable additive in the lower layer region and in the upper layer region are regarded as Pb and Pt, respectively. The Pb and Pt are measured in a rectangular field of view defined by a length 300 $\mu$m in a plane direction of the positive electrode active material layer multiplied by a thickness T of the positive electrode active material layer. The Pb and Pt may be an average value of Pb's and an average value of Pt's, respectively, obtained in a plurality of (e.g., three or more) fields of view.

Preferably, when the thickness of the positive electrode active material layer is denoted by T, $5 \leq$ Pt(q)/Pb(q) $\leq 250$ may be satisfied, where the Pb(q) represents a presence probability of the thermal decomposable additive in a region from the surface of the positive electrode current collector to 0.25T in the positive electrode active material layer, and the Pt(q) represents a presence probability of the thermal decomposable additive in a region from a position at 0.75T from the surface of the positive electrode current collector to the outermost surface (i.e., the surface on the separator side of the positive electrode active material layer) in the positive electrode active material layer.

<Production method of positive electrode>

Next, an example of a method of producing a positive electrode for a secondary battery according to an embodiment of the present disclosure will be described.

The production method includes: a step (I) of preparing a positive electrode slurry containing active material particles, a binder, a thermal decomposable additive, and a dispersion medium; a step (II) of preparing a positive electrode current collector; a step (III) of applying the positive electrode slurry onto a surface of the positive electrode current collector, to form an applied film; a step (IV) of drying the applied film, to form an unrolled layer; and a step (V) of rolling the unrolled layer, to form a positive electrode active material layer.

(I) Step of preparing slurry

A positive electrode slurry is prepared by mixing a positive electrode mixture including active material particles, a binder, and a thermal decomposable additive, with a liquid dispersion medium, to disperse the mixture into the dispersion medium. The positive electrode mixture may further include another component (e.g., a conductive material). As the liquid dispersion medium, an organic solvent having excellent affinity with both the binder and the thermal decomposable additive is used.

The organic solvent is preferably N-methyl-2-pyrrolidone (NMP), but may be an alcohol such as ethanol, an ether such as tetrahydrofuran, an amide such as dimethylformamide, a ketone such as cyclohexanone, and the like.

As the thermal decomposable additive, a sulfamic acid is used at least. The sulfamic acid may be mixed with a dispersion medium in advance to be partially dissolved. For example, particles of a sulfamic acid having an average particle diameter D1 may be mixed with a dispersion medium, to prepare a liquid dispersion of particles of the sulfamic acid having an average particle diameter d1 (d1 < D1). Here, the average particle diameter is a median diameter ($D_{50}$) at 50% cumulative volume in a volume-based particle size distribution obtained using a laser diffraction particle size distribution analyzer. The average particle diameter D1 is desirably 100 $\mu$m or less, and more preferably, a sulfamic acid that passes through a 100-$\mu$m mesh is used. The average particle diameter d1 is desirably 50 $\mu$m or less.

As the binder, at least one selected from the group consisting of a fluorocarbon resin and a hydrogenated nitrile butadiene rubber is used. Examples of the fluorocarbon resin include polyvinylidene fluoride (PVDF), polytetrafluoroethylene (PTFE), perfluoroalkoxyalkane (PFA), tetrafluoroethylene-hexafluoropropylene copolymer (FEP), and ethylene-tetrafluoroethylene copolymer (ETFE), and vinylidene fluoride-hexafluoropropylene copolymer. These are readily soluble in an organic solvent and are suitable for use in combination with a sulfamic acid. In particular, PVDF is preferred.

(II) Step of preparing positive electrode current collector

As the positive electrode current collector, a sheet of conductive material (metal foil, mesh, net, punched sheet, etc.) is used. In particular, a metal foil is preferred. Examples of the material of the positive electrode current collector include stainless steel, aluminum, an aluminum alloy, and titanium. The thickness of the positive electrode current collector is not particularly limited, but is, for example, 1 to 50 $\mu$m, and may be 5 to 30 $\mu$m.

(III) Step of forming applied film of positive electrode slurry

An applied film is formed by applying the positive electrode slurry onto a surface of the positive electrode current collector. Examples of an apparatus used for applying the positive electrode slurry include a bar coater, a gravure coater, a blade coater, a roll coater, a comma coater, a die coater, and a lip coater.

In the positive electrode slurry applied onto a surface of the positive electrode current collector, it is desirable that at least part of the thermal decomposable additive is in the form of particles having a particle diameter of 10 $\mu$m or more. By this, a positive electrode active material layer containing a thermal decomposable additive having a particle diameter of 10 $\mu$m or more can be easily obtained. Furthermore, only part of the surfaces of the active material particles are likely to be covered with the thermal decomposable additive.

(IV) Step of drying applied film

Next, the applied film is dried to volatilize the dispersion medium, to form an unrolled applied film. By controlling the conditions for drying as appropriate, the thermal decomposable additive may be allowed to migrate, together with the dispersion medium, from the lower layer region to the upper layer region (i.e., from the positive electrode current collector side to the separator side). This results in a state where the thermal decomposable additive is more distributed on the separator side than on the positive electrode current collector side in the positive electrode active material layer. For example, when the applied film is dried at a temperature of 150 °C or higher, or 200° C or higher, the thermal decomposable additive is likely to be more distributed on the separator side than on the positive electrode current collector side in the positive electrode active material layer.

For example, when the thickness of the unrolled layer is dented by T2, $2 \leq P2t/P2b$ may be satisfied, where the P2b represents a presence probability of the thermal decomposable additive in a region from the surface of the positive electrode current collector to 0.5T2 in the unrolled layer, and the P2t represents a presence probability of the thermal decomposable additive in a region from the position at 0.5T2 from the surface of the positive electrode current collector to the outermost surface in the unrolled layer.

(V) Step of rolling unrolled layer

Next, the unrolled layer is rolled, to form a positive electrode active material layer. The rolling conditions are not particularly limited, but the density of the active material particles (positive electrode active material) in the positive electrode active material layer is, for example, 3.3 g/cm$^3$ or more and 4.0 g/cm$^3$ or less, and may be 3.5 g/cm$^3$ or more and 4.0 g/cm$^3$ or less.

Although a description is given here to control the P2t/P2b by controlling the conditions for drying the applied film, the method of controlling the P2t/P2b is not limited thereto. For example, a positive electrode active material layer constituted of two or more layers differing in the content of the thermal decomposable additive may be formed by applying two or more kinds of positive electrode slurries in layers.

B. Secondary battery

A secondary battery according to an embodiment of the present disclosure includes: a lithium-ion secondary battery in which a material that reversibly absorbs and releases lithium ions is used as the negative electrode active material; and a lithium secondary battery in which lithium metal deposits at the negative electrode during charging, and the lithium metal dissolves during discharging. These secondary batteries include the above-described positive electrode for a secondary battery, a negative electrode, a lithium-ion conductive electrolyte, and a separator interposed between the positive electrode and the negative electrode. The secondary battery may be a liquid-type secondary battery including a liquid electrolyte as the lithium-ion conductive electrolyte, and the liquid electrolyte may be a nonaqueous liquid electrolyte or an aqueous electrolyte solution. The secondary battery may be an all-solid secondary battery including a solid electrolyte as the lithium-ion conductive electrolyte.

In the following, using a lithium-ion secondary battery as an example, the configuration of the secondary battery will be specifically described.

[Positive electrode]

As the positive electrode, a positive electrode for a secondary battery having the above-described features is used. The positive electrode active material layer is constituted of a positive electrode mixture. The positive electrode mixture includes, as essential components, active material particles (particles of a positive electrode active material), a binder, and a thermal decomposable additive (at least a sulfamic acid), and may also include optional components. The optional components may include a conductive material, a thickener, and the like.

The thickness of the positive electrode active material layer is not particularly limited, but may be, for example, 50 $\mu$m or more and 150 $\mu$m or less, or 75 $\mu$m or more and 125 $\mu$m or less. One positive electrode active material layer may be formed using a plurality of layers having different morphologies from each other. For example, two or more layers containing active material particles with different average particle diameters from each other may be used, or two or more layers differing in the type or composition of positive electrode active material from each other may be used.

The average particle diameter of the active material particles (particles of positive electrode active material) is, for example, 3 $\mu$m or more and 30 $\mu$m or less, and may be 5 $\mu$m or more and 25 $\mu$m or less. Herein also, the average particle diameter is a median diameter ($D_{50}$) at 50% cumulative volume in a volume-based particle size distribution obtained using a laser diffraction particle size distribution analyzer. The active material particles may be separated and collected from the positive electrode. The measuring instrument that can be used is, for example, "LA-750", available from Horiba, Ltd. (HORIBA).

The average particle diameter of the active material particles may be measured from the above-described cross-sectional sample of the positive electrode. For example, a SEM image of the cross section is photographed so that 10 or more active material particles are observed, and through image processing, the diameters of equivalent circles respectively having the same areas as the cross sections of 10 or more active material particles are measured, to calculate an average of them as the average particle diameter.

The positive electrode active material constituting the active material particles may include a lithium-containing transition metal oxide. In view of achieving high capacity, it is desirable that the lithium-containing transition metal oxide contains a lithium-nickel oxide (composite oxide N) including lithium and Ni and having a layered rock-salt type crystal structure. The proportion of the composite oxide N in the positive electrode active material is, for example, 70 mass% or more, may be 90 mass% or more, and may be 95 mass% or more. The proportion of Ni in the metal elements other than Li contained in the composite oxide N may be 50 at.% or more.

The composite oxide N is represented by, for example, a formula (1): $Li_{\alpha}Ni_{x1}M1_{x2}M2_{(1-x1-x2)}O_{2+\beta}$. Here, the element M1 is at least one selected from the group consisting of V, Co, and Mn. The element M2 is at least one selected from the group consisting of Mg, Al, Ca, Ti, Cu, Zn, and Nb. The formula (1) satisfies $0.95 \leq \alpha \leq 1.05$, $-0.05 \leq \beta \leq 0.05$, $0.5 \leq x1 < 1$, $0 \leq x2 \leq 0.5$, and $0 < 1-x1-x2 \leq 0.5$. The value of $\alpha$ increases and decreases during charging and discharging.

The composite oxide N contains Ni, and may further contain at least one selected from the group consisting of Co, Mn, and Al, as the element M1 and the element M2. Co, Mn, and Al contribute to stabilizing the crystal structure of the composite oxide N.

In view of achieving cost reduction and high capacity, the proportion of Co in the metal elements other than Li contained in the composite oxide N is desirably 0 at.% or more and 20 at.% or less, more desirably 0 at.% or more and 15 at.% or less.

The proportion of Mn in the metal elements other than Li may be 10 at.% or less, and may be 5 at.% or less. The proportion of Mn in the metal elements other than Li may be 1 at.% or more, may be 3 at.% or more, and may be 5 at.% or more.

The proportion of Al in the metal elements other than Li may be 10 at.% or less, or 5 at.% or less. The proportion of Al in the metal elements other than Li may be 1 at.% or more, may be 3 at.% or more, and may be 5 at.% or more.

The composite oxide N can be represented by, for example, a formula (2): $Li_{\alpha}Ni_{(1-y1-y2-y3-z)}Co_{y1}Mn_{y2}Al_{y3}M_{z}O_{2+\beta}$. The element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y The formula (2) satisfies $0.95 \leq \alpha \leq 1.05$, $-0.05 \leq \beta \leq 0.05$, $0 \leq y1 \leq 0.1$, $0 \leq y2 \leq 0.1$, $0 \leq y3 \leq 0.1$, and $0 \leq z \leq 0.10$. The symbol $1-y1-y2-y3-z$ ($= v$) representing the atomic ratio of Ni is, for example, 0.8 or more, may be 0.85 or more, and may be 0.90 or more, or 0.95 or more. The symbol $v$ representing the atomic ratio of Ni may be 0.98 or less, may be 0.95 or less.

Examples of the conductive material that can be included as an optional component in the positive electrode active material layer include carbon nanotubes (CNTs), carbon fibers other than CNTs, and conductive particles (e.g., carbon black, graphite).

[Negative electrode]

The negative electrode includes at least a negative electrode current collector, and includes, for example, a negative electrode current collector, and a negative electrode active material layer. The negative electrode active material layer is supported on one or both surfaces of the negative electrode current collector.

The negative electrode active material layer may be a negative electrode mixture layer constituted of a negative electrode mixture. The negative electrode mixture layer is in the form of a membrane or film. The negative electrode mixture contains particles of a negative electrode active material as an essential component, and may contain a binder, a conductive agent, a thickener, and the like, as optional components. A lithium metal foil or lithium alloy foil may be attached as a negative electrode active material layer to the negative electrode current collector.

The negative electrode mixture layer can be formed by, for example, applying a negative electrode slurry of a negative electrode mixture containing particles of a negative electrode active material, a binder, and the like dispersed into a dispersion medium, onto a surface of a negative electrode current collector, followed by drying. The dry applied film may be rolled as necessary.

The negative electrode active material includes a material that electrochemically absorbs and releases lithium ions, lithium metal, a lithium alloy, and the like. As the material that electrochemically absorbs and releases lithium ions, a carbon material, an alloy-type material, and the like can be used. Examples of the carbon material include graphite, graphitizable carbon (soft carbon), and non-graphitizable carbon (hard carbon). Particularly preferred is graphite, which is stable during charging and discharging and whose irreversible capacity is small. As the alloy-type material, a material containing at least one metal capable of forming an alloy with lithium may be used, examples of which include silicon, tin, a silicon alloy, a tin alloy, a silicon compound and the like. Silicon oxide, tin oxide, and the like may be used, and other silicon-containing materials may be used.

As the negative electrode current collector, a nonporous conductive substrate (metal foil, etc.) and a porous conductive substrate (mesh, net, punched sheet, etc.) can be used. Examples of the material of the negative electrode current collector include stainless steel, nickel, a nickel alloy, copper, and a copper alloy.

The binder may be, for example, styrene-butadiene rubber, but not particularly limited thereto.

Examples of the conductive material include carbon nanotubes (CNTs), carbon fibers other than CNTs, and conductive particles (e.g., carbon black, graphite).

Examples of the thickener include: cellulose derivatives (e.g., cellulose ethers), such as carboxymethyl cellulose (CMC) and modified products thereof (including salts, such as Na salt), and methyl cellulose; saponified products of a polymer having a vinyl acetate unit, such as polyvinyl alcohol; and polyethers (e.g., polyalkylene oxide, such as polyethylene oxide).

[Separator]

The separator is interposed between the positive electrode and the negative electrode. The separator is excellent in ion permeability and has moderate mechanical strength and electrically insulating properties. The separator may be a microporous thin film, a woven fabric, a nonwoven fabric, and the like. The material of the separator may be, for example, polyolefin, such as polypropylene and polyethylene. The separator may have a heat-resistant, electrically-insulating layer as a surface layer on at least one side. The heat-resistant, electrically-insulating layer may contain an inorganic oxide filler as a major component (e.g., 80 mass% or more), or a heat-resistant resin as a major component (e.g., 40 mass% or more). The heat-resistant resin may be a polyamide resin, such as aromatic polyamide (aramid), a polyimide resin, a polyamide imide resin, and the like.

[Electrolyte]

The electrolyte may be a liquid electrolyte (electrolyte solution), may be a gel electrolyte, and may be a solid electrolyte. The liquid electrolyte (electrolyte solution) may be, for example, a nonaqueous liquid electrolyte containing a nonaqueous solvent and a lithium salt dissolved in the nonaqueous solvent. The concentration of the lithium salt in the nonaqueous liquid electrolyte is, for example, 0.5 mol/L or more and 2 mol/L or less. The nonaqueous liquid electrolyte may contain a known additive. The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide. The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyro-lactone (GBL), and $\gamma$-valerolactone (GVL). The nonaqueous solvent may be used singly, or in combination of two or more kinds.

Examples of the lithium salt include a lithium salt of a chlorine-containing acid ($LiClO_4$, $LiAlCl_4$, $LiB_{10}Cl_{10}$, etc.), a lithium salt of a fluorine-containing acid ($LiPF_6$, $LiBF_4$, $LiSbF_6$, $LiAsF_6$, $LiCF_3SO_3$, $LiCF_3CO_2$, etc.), a lithium salt of a fluorine-containing acid imide ($LiN(SO_2F)_2$, $LiN(CF_3SO_2)_2$, $LiN(CF_3SO_2)(C_4F_9SO_2)$, $LiN(C_2F_5SO_2)_2$, etc.), and a lithium halide ($LiCl$, $LiBr$, $LiI$, etc.). The lithium salt may be used singly, or in combination of two or more kinds.

The secondary battery, for example, has a structure in which an electrode group formed by winding the positive electrode and the negative electrode with the separator interposed therebetween is housed together with the liquid electrolyte in an outer body. Without limited thereto, a different form of electrode group may be adopted. For example, a stacked-type electrode group formed by stacking the positive electrode and the negative electrode with the separator interposed therebetween may be adopted. The form of the battery is also not limited, and may be cylindrical, prismatic, coin, button, or laminate type.

In the following, a structure of a secondary battery will be described with reference to FIG. 1. FIG. 1 is a longitudinal cross-sectional view of a cylindrical nonaqueous secondary battery 10 which is an example of the present embodiment. The present disclosure, however, is not limited to the following configuration.

The secondary battery 10 includes an electrode group 18, a liquid electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive external terminal. A negative electrode lead 16a extended from the negative electrode plate 16 is connected to the bottom inner surface of the battery can 22. An annular groove 22a is formed near the open end of the battery can 22. A first insulating plate 23 is placed between one end surface of the electrode group 18 and the annular groove 22a. A second insulating plate 24 is placed between the other end surface of the electrode group 18 and the bottom of the battery can 22. The electrode group 18 is formed of the positive electrode plate 15 and the negative electrode plate 16 wound together, with the separator 17 interposed therebetween.

In the following, the present disclosure will be specifically described with reference to Examples and Comparative Examples. The present disclosure, however, is not limited to the following Examples.


«Example 1»

[Production of positive electrode]

A composite oxide N ($LiNi_{0.85}Co_{0.10}Al_{0.05}O_2$) having an average particle diameter of 13 $\mu$m was used as the positive electrode active material constituting the active material particles. A 15-$\mu$m-thick aluminum foil was prepared as a positive electrode current collector.

To a positive electrode mixture containing the active material particles, acetylene black, and polyvinylidene fluoride (PVDF) in a mass ratio of 95:2.5:2.5, and containing a sulfamic acid (average particle diameter 100 $\mu$m) at a content of 0.65 mass%, NMP was added, and stirred together, to prepare a positive electrode slurry. At this time, the stirring conditions were controlled so that the particle diameter of the sulfamic acid fell in the range of 10 $\mu$m to 50 $\mu$m.

The positive electrode slurry was applied onto a surface of an aluminum foil serving as a positive electrode current collector, and the applied film was dried, to form an unrolled layer on each of both surfaces of the aluminum foil. At this time, the drying temperature was controlled at 200 °C so that in the later-described distribution of the sulfamic acid in the positive electrode active material layer, the Pt/Pb ratio satisfied more than 2 (Pt/Pb = 5 was satisfied.)

Next, the unrolled layers were rolled into positive electrode active material layers each having a positive electrode active material density of 3.6 g/cm$^3$. The overall thickness of the positive electrode after rolling was 160 $\mu$m.

[Production of negative electrode]

To a negative electrode mixture containing graphite serving as a negative electrode active material, sodium carboxymethyl cellulose (CMC-Na), and styrene-butadiene rubber (SBR) in a mass ratio of 96:2:2, water was added, and stirred together, to prepare a negative electrode slurry. Next, the negative electrode slurry was applied onto a surface of a copper foil serving as a negative electrode current collector, and the applied film was dried, and then rolled, to form a negative electrode active material layer on each of both surfaces of the copper foil. The density of the negative electrode active material in the negative electrode active material layer was adjusted to 1.6 g/cm$^3$. The overall thickness of the negative electrode was 170 μm.

[Preparation of nonaqueous electrolyte]

In a mixed solvent containing ethylene carbonate (EC) and diethyl carbonate (DEC) in a volume ratio of 3:7, $LiPF_6$ was dissolved at a concentration of 1.0 mol/L, to prepare a nonaqueous electrolyte.

[Fabrication of secondary battery]

With a tab attached to each electrode, the positive electrode and the negative electrode were wound spirally with the separator interposed therebetween such that the tab was positioned at the outermost layer, thereby to form an electrode group. The electrode group was inserted into an outer body made of aluminum laminated film and dried under vacuum at 105 °C for two hours. Then, the liquid electrolyte was injected, and the opening of the outer body was sealed. A secondary battery A1 was thus obtained.

«Example 2»

A secondary battery A2 was fabricated in the same manner as in Example 1, except that the content of the sulfamic acid (average particle diameter 100 μm) in the positive electrode mixture was changed to 1.30 mass%, and a positive electrode active material layer satisfying Pt/Pb = 7.5 was formed.

«Example 3»

A secondary battery A3 was fabricated in the same manner as in Example 2, except that the drying temperature was controlled to room temperature so that the distribution of the sulfamic acid in the positive electrode active material layer satisfied Pt/Pb < 2 (here, P2t/P2b ≈ 1.

«Example 4»

A secondary battery A4 was fabricated in the same manner as in Example 2, except that the sulfamic acid was completely dissolved in NMP in advance when preparing the positive electrode slurry. Specifically, the sulfamic acid was added in an amount equivalent to 1.3 mass% of the positive electrode mixture into NMP of 50 °C, and dissolved over 3 hours. Then, active material particles, acetylene black, and polyvinylidene fluoride (PVDF) were added in a mass ratio of 95:2.5:2.5 into the NMP solution of the sulfamic acid, and stirred, to prepare a positive electrode slurry, and form a positive electrode active material layer satisfying Pt/Pb = 7.5.

«Example 5»

A secondary battery A5 was fabricated in the same manner as in Example 4, except that the drying temperature was controlled to room temperature so that the distribution of the sulfamic acid in the positive electrode active material layer satisfied Pt/Pb < 2 (here, P2t/P2b ≈ 1.

<<Comparative Example 1»

A secondary battery B1 was fabricated in the same manner as in Example 1, except that no sulfamic acid was contained in the positive electrode mixture (the content of the sulfamic acid was 0%).

[Evaluation 1]

The secondary batteries obtained in Examples and Comparative Example were evaluated as follows.

(1) Discharge capacity

In a 25 °C environment, the battery was constant-current charged at a constant current of 0.3 It until the voltage reached 4.2 V, and then constant-voltage charged at a constant voltage of 4.2 V until the current reached 0.05 It. This was followed by discharging at a constant current of 0.3 It until the voltage reached 2.5 V A set of the same charging and discharging was performed twice, and the discharge capacity at the second time was determined. The discharge capacities of the batteries A1 to A5 are shown in Table 1 as relative values (%) with the discharge capacity of the battery B1 taken as 100%.

(2) Heat generation test

(a) In a 25 °C environment, the batteries were constant-current charged at a constant current of 0.3 It until the voltage reached 4.2 V, and then constant-voltage charged at a constant voltage of 4.2 V until the current reached 0.05 It.

(b) In a 25 °C environment, the tip of a round nail (diameter 2.7 mm) was brought into contact with each battery charged in (a) at its center, and driven into the battery at a speed of 1 mm/sec. Immediately after the detection of a battery voltage drop (Δ50 mV) due to an internal short circuit, the driving of the round nail was stopped. The surface temperature of the battery was measured one minute after the battery was short-circuited. The surface temperatures of the batteries A1 to A5 and the battery B1 are shown in Table 1.

Table 1]

| secondary battery | binder | content of sulfamic acid (%) | Pt/Pb | localization of sulfamic acid | particles of 10 μm or more | discharge capacity (%) | surface temperature (°C) |
|---|---|---|---|---|---|---|---|
| A1 | PVDF | 0.65 | 5 | with | with | 99.0 | 37.9 |
| A2 | PVDF | 1.30 | 7.5 | with | with | 97.9 | 25.0 |
| A3 | PVDF | 1.30 | 1 | without | with | 97.9 | 37.7 |
| A4 | PVDF | 1.30 | 7.5 | with | without | 97.9 | 34.0 |
| A5 | PVDF | 1.30 | 1 | without | without | 97.9 | 43.2 |
| B1 | PVDF | 0 | - | - | without | 100 | 80 or higher |

Table 1 shows that in the batteries A1 to A5, with almost no influence on the battery performance, the safety when an internal short circuit occurred in the battery was improved as compared to the battery B1. Furthermore, comparison among Examples having the same Pt/Pb value show that when the positive electrode active material layer contained particles or assemblages of 10 μm or more of the sulfamic acid, the improvement in safety was remarkable.

[Industrial Applicability]

A positive electrode for a secondary battery according to the present disclosure and a secondary battery including the positive electrode are useful as main power sources for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: secondary battery, 11: sealing assembly, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate

**Claims**

1. A positive electrode for a secondary battery, comprising:

a positive electrode current collector; and a positive electrode active material layer supported on the positive electrode current collector, wherein

the positive electrode active material layer contains active material particles, a binder, and a thermal decomposable additive,

the thermal decomposable additive includes a sulfamic acid, and

the binder includes at least one selected from the group consisting of a fluorocarbon resin and a hydrogenated nitrile butadiene rubber.

2. The positive electrode for a secondary battery according to claim 1, wherein at least part of the thermal decomposable additive is present as particles having a particle diameter of 10 $\mu$m or more, in the positive electrode active material layer.

3. The positive electrode for a secondary battery according to claim 2, wherein in a cross-sectional observation of the positive electrode active material layer, 5 or more particles of the thermal decomposable additive having a particle diameter of 10 $\mu$m or more are observed in a rectangular field of view defined by a length 300 $\mu$m in a plane direction of the positive electrode active material layer multiplied by a thickness of the positive electrode active material layer.

4. The positive electrode for a secondary battery according to claim 1 or 2, wherein a content of the sulfamic acid in the positive electrode active material layer is 0.1 mass% or more and 5 mass% or less.

5. The positive electrode for a secondary battery according to any one of claims 1 to 4, wherein, when a cross section of the positive electrode active material layer is analyzed using a scanning electron microscope and an electron probe microanalyzer, an area of a portion where the sulfamic acid is present is 0.5 area% or more and 27 area% or less in a rectangular field of view defined by a length 300 $\mu$m in a plane direction of the positive electrode active material layer multiplied by a thickness T of the positive electrode active material layer.

6. The positive electrode for a secondary battery according to any one of claims 1 to 5, wherein a sulfuric acid component is contained in an amount of 50 $\mu$g or more and 1000 $\mu$g or less per 1 gram of the thermal decomposable additive.

7. The positive electrode for a secondary battery according to any one of claims 1 to 6, wherein the thermal decomposable additive covers part of surfaces of the active material particles.

8. The positive electrode for a secondary battery according to any one of claims 1 to 7, wherein the thermal decomposable additive is more distributed near an outermost surface of the positive electrode active material layer than near a surface facing the positive electrode current collector of the positive electrode active material layer.

9. The positive electrode for a secondary battery according to claim 8, wherein $2 \leq Pt/Pb$ is satisfied,

where when a thickness of the positive electrode active material layer is denoted by T,

the Pb represents a presence probability of the thermal decomposable additive present in a region from a surface of the positive electrode current collector to 0.5T in the positive electrode active material layer, and

the Pt represents a presence probability of the thermal decomposable additive present in a region from a position at 0.5T from the surface of the positive electrode current collector to the outermost surface in the positive electrode active material layer.

10. The positive electrode for a secondary battery according to any one of claims 1 to 9, wherein

the active material particles include a lithium-containing transition metal oxide,

the lithium-containing transition metal oxide contains a lithium-nickel oxide including lithium and Ni, and having a layered rock-salt type crystal structure, and

a proportion of Ni in metal elements other than Li contained in the lithium-nickel oxide is 50 at.% or more.

11. The positive electrode for a secondary battery according to claim 10, wherein

the lithium-nickel oxide is represented by

a formula: $Li_\alpha Ni_{x1}M1_{x2}M2_{(1-x1-x2)}O_{2+\beta}$,

where the element M1 is at least one selected from the group consisting of V, Co, and Mn,

the element M2 is at least one selected from the group consisting of Mg, Al, Ca, Ti, Cu, Zn, and Nb,

$$0.95 \leq \alpha \leq 1.05,$$

$$-0.05 \leq \beta \leq 0.05,$$

$$0.5 \leq x1 < 1,$$

$$0 \leq x2 \leq 0.5, \text{ and}$$

and

$$0 < 1\text{-}x1\text{-}x2 \leq 0.5.$$

12. A secondary battery, comprising: the positive electrode for a secondary battery of any one of claims 1 to 11; a negative electrode; a lithium-ion conductive electrolyte; and a separator interposed between the positive electrode and the negative electrode.

13. A method for producing a positive electrode for a secondary battery, the method comprising steps of:

   preparing a positive electrode slurry containing active material particles, a binder, a thermal decomposable additive, and a dispersion medium;
   preparing a positive electrode current collector;
   applying the positive electrode slurry onto a surface of the positive electrode current collector, to form an applied film;
   drying the applied film, to form an unrolled layer; and
   rolling the unrolled layer, to form a positive electrode active material layer, wherein
   the thermal decomposable additive includes a sulfamic acid,
   the binder includes at least one selected from the group consisting of a fluorocarbon resin and a hydrogenated nitrile butadiene rubber, and
   the dispersion medium includes an organic solvent.

14. The method for producing a positive electrode for a secondary battery of claim 13, wherein at least part of the thermal decomposable additive is present as particles having a particle diameter of 10 $\mu$m or more, in the positive electrode slurry.

15. The method for producing a positive electrode for a secondary battery according to claim 13 or 14, wherein

   $2 \leq$ Pt/Pb is satisfied,
   where when a thickness of the positive electrode active material layer is denoted by T,
   the Pb represents a presence probability of the thermal decomposable additive present in a region from a surface of the positive electrode current collector to 0.5T in the positive electrode active material layer, and
   the Pt represents a presence probability of the thermal decomposable additive present in a region from a position at 0.5T from the surface of the positive electrode current collector to an outermost surface in the positive electrode active material layer.

*FIG. 1*

<div align="center">

**INTERNATIONAL SEARCH REPORT**

</div>

| | International application No. |
|---|---|
| | **PCT/JP2022/047281** |

### A. CLASSIFICATION OF SUBJECT MATTER

*H01M 4/62*(2006.01)i; *H01M 4/131*(2010.01)i; *H01M 4/1391*(2010.01)i; *H01M 4/36*(2006.01)i; *H01M 4/505*(2010.01)i; *H01M 4/525*(2010.01)i
FI:    H01M4/62 Z; H01M4/505; H01M4/525; H01M4/131; H01M4/1391; H01M4/36 C

According to International Patent Classification (IPC) or to both national classification and IPC

### B. FIELDS SEARCHED

Minimum documentation searched (classification system followed by classification symbols)

H01M4/62; H01M4/131; H01M4/1391; H01M4/36; H01M4/505; H01M4/525

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-75222 A (TOYOTA MOTOR CORP.) 16 May 2019 (2019-05-16) claims, paragraphs [0020]-[0053], [0072], [0079]-[0082], [0089] | 1, 4, 7, 10-13 |
| A | | 2-3, 5-6, 8-9, 14-15 |
| A | WO 2019/021891 A1 (ZEON CORP.) 31 January 2019 (2019-01-31) | 1-15 |
| A | JP 2013-54968 A (NTT FACILITIES, INC., SHIN KOBE ELECTRIC MACH. CO., LTD.) 21 March 2013 (2013-03-21) | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/047281**

| Patent document cited in search report | | | Publication date (day/month/year) | Patent family member(s) | | | Publication date (day/month/year) |
|---|---|---|---|---|---|---|---|
| JP | 2019-75222 | A | 16 May 2019 | US | 2019/0115598 | A1 | |
| | | | | claims, paragraphs [0023]-[0072], [0115], [0122]-[0128], [0137] | | | |
| | | | | CN | 109671950 | A | |
| WO | 2019/021891 | A1 | 31 January 2019 | US | 2020/0176782 | A1 | |
| | | | | EP | 3660953 | A1 | |
| | | | | CN | 110870103 | A | |
| | | | | KR | 10-2020-0037213 | A | |
| JP | 2013-54968 | A | 21 March 2013 | WO | 2013/035721 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000315502 A